# EUROPÄISCHE PATENTANMELDUNG

(11) **EP 3 995 861 A1**
(43) Veröffentlichungstag der Anmeldung: **11.05.2022**
(21) Anmeldenummer: 21202632.2
(22) Anmeldetag: 14.10.2021
(51) Int. Cl.: G01T 1/167

(54) **VERFAHREN ZUR BEWERTUNG EINES, INSBESONDERE ZUMINDEST TEILWEISE RADIOAKTIVEN, MESSGUTES, COMPUTERPROGRAMMPRODUKT SOWIE MESSANLAGE**

(30) Priorität: 06.11.2020 DE 102020129361
(71) Anmelder: Safetec Entsorgungs- und Sicherheitstechnik GmbH, 69123 Heidelberg (DE)
(72) Erfinder: Weinhorst, Bastian, 76703 Kraichtal (DE); Thomas, Tim, 68723 Schwetzingen (DE)
(74) Vertreter: Bals & Vogel Patentanwälte PartGmbB

(57) **Zusammenfassung**

Die Erfindung betrifft ein Verfahren (100) zur Bewertung eines, insbesondere zumindest teilweise radioaktiven, Messgutes (10) umfassend die folgenden Schritte: Erfassen (101) des Messgutes (10), Bestimmen (105) von zumindest zwei Zonen (20) zur berührungslosen Unterteilung des Messgutes (10). Ferner betrifft die Erfindung ein Computerprogrammprodukt (200), sowie eine Messanlage (1).

## Beschreibung

Die Erfindung betrifft ein Verfahren zur Bewertung eines, insbesondere zumindest teilweise radioaktiven, Messgutes, ein Computerprogrammprodukt sowie eine Messanlage.

Freimessungen für radioaktive Reststoffe sind beispielsweise aus dem Rückbau von kerntechnischen Anlagen, wie z. B. Atomkraftwerken, bekannt. Dabei ist es in der Regel das Ziel, einen möglichst hohen Anteil der Reststoffe einer konventionellen Abfallverwertung, wie z. B. einem Recycling, zuzuführen. Reststoffe, die aufgrund ihrer radioaktiven Kontaminierung nicht freigemessen werden können, werden üblicherweise für eine Einlagerung in einem Endlager vorbereitet. Um die Freimessungen durchzuführen, werden die Reststoffe üblicherweise in einzelnen, vorsortierten Chargen hinsichtlich ihrer vorhandenen Radioaktivität gegenüber gesetzlich vorgegebenen Grenzwerten untersucht. Die Chargen werden für die Messungen jedoch im Normalfall nur als eine Einheit betrachtet, sodass nur für die gesamte Charge eine Aussage über die Freigebbarkeit getroffen werden kann. Daher werden üblicherweise nur kleinere Mengen der Reststoffe einzeln untersucht, wodurch der Freimessprozess eine erhöhte Zeitdauer und erhöhte Kosten aufweisen kann. Größere Chargen, die einen Grenzwert überschreiten werden z. B. häufig manuell in kleinere Chargen aufgeteilt.

Es ist eine Aufgabe der vorliegenden Erfindung, voranstehende, aus dem Stand der Technik bekannte Nachteile zumindest teilweise zu beheben. Insbesondere ist es eine Aufgabe der vorliegenden Erfindung eine Bewertung eines, vorzugsweise zumindest teilweise radioaktiven, Messgutes zu vereinfachen, vorzugsweise zu verkürzen.

Die voranstehende Aufgabe wird gelöst durch ein Verfahren mit den Merkmalen des Anspruchs 1, ein Computerprogrammprodukt mit den Merkmalen des Anspruchs 11, sowie eine Messanlage mit den Merkmalen des Anspruchs 12. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogrammprodukt und/oder der erfindungsgemäßen Messanlage und jeweils umgekehrt, sodass bezüglich der Offenbarung zu den einzelnen Erfindungsaspekten stets wechselseitig Bezug genommen wird bzw. werden kann.

Gemäß einem ersten Aspekt der Erfindung ist ein Verfahren zur Bewertung eines, insbesondere zumindest teilweise radioaktiven, Messgutes. Das Verfahren umfasst die folgenden Schritte:
- Erfassen des Messgutes, insbesondere durch ein Erfassungsmittel einer Messanlage,
- Bestimmen von zumindest zwei Zonen zur berührungslosen Unterteilung des Messgutes, insbesondere durch ein Unterteilungsmodul einer Steuereinheit der Messanlage,
- Ermitteln einer radioaktiven Einzelaktivität für zumindest eine der Zonen, insbesondere durch ein Einzelbewertungsmodul der Steuereinheit,
- Bewerten der Einzelaktivität für die zumindest eine Zone zur Beurteilung einer Freigebbarkeit des Messgutes, insbesondere durch das Einzelbewertungsmodul der Steuereinheit.

Bei dem Messgut handelt es sich vorzugsweise um ein eventuell oder potentiell zumindest teilweise oder vollständig radioaktives Messgut. Somit kann insbesondere vorgesehen sein, dass beim Beginn des Verfahrens noch nicht feststeht, ob das Messgut radioaktiv ist oder nicht. Das Messgut kann Reststoffe umfassen, die beispielsweise aus dem Rückbau einer kerntechnischen Anlage, wie einem Atomkraftwerk, stammen. Dabei kann das Messgut vorzugsweise Metallabfälle umfassen oder aus Metallabfällen bestehen. Es ist jedoch ebenso denkbar, dass das Messgut Baustoffe, wie z. B. Beton und/oder Bauschutt, und/oder Reststoffe aus mehreren Komponenten, wie z. B. Kabel, umfasst. Vorteilhafterweise kann das Messgut eine Masse von über 50 kg, vorzugsweise von 50 bis 100 kg oder von 300 bis 400 kg, aufweisen.

Das Erfassen des Messgutes kann ein Erkennen des Messgutes, ein Registrieren des Messgutes, insbesondere in Form einer elektronischen Datenaufnahme, und/oder ein Lokalisieren des Messgutes umfassen. Das Erfassen des Messgutes kann vorzugsweise sensorisch erfolgen. Beispielsweise kann das Messgut optisch in einer Messkammer der Messanlage erkannt werden. Dazu kann die Messkammer ein Lasermessgerät aufweisen. Durch das Lasermessgerät kann z. B. eine Kante des Messgutes erfasst werden und durch ein Gewicht des Messgutes und/oder durch einen Einheitsbehälter, in welchem sich das Messgut befindet, auf ein Volumen des Messgutes geschlossen werden. Ferner kann vorgesehen sein, dass die Messanlage eine Waage aufweist, durch welche eine Positionierung des Messgutes in der Messanlage anhand des Gewichtes des Messgutes erfassbar ist. Weiterhin kann ein Bewegungsmittel der Messanlage dazu ausgebildet sein, das Messgut mittig in der Messkammer zu positionieren, um eine geometrische Referenz für das Messgut zu bestimmen. Ferner kann anhand des Gewichtes eine geometrische Mitte des Messgutes erkannt werden. Es ist jedoch ebenso denkbar, dass das Erfassen des Messgutes anhand einer Benutzereingabe erfolgt. Beispielsweise kann vorgesehen sein, dass das Messgut in einem vorbestimmten Messabschnitt der Messanlage positioniert wird und anschließend die Positionierung manuell bestätigt wird. Somit ist es denkbar, dass das Erfassen des Messgutes steuerungstechnisch erfolgt. Vorzugsweise erfolgt beim Erfassen des Messgutes eine radiologische Charakterisierung des Messgutes. Dabei kann bestimmt werden, welche Art von Radioaktivität das Messgut aufweist. Zum Sicherstellen einer Funktionalität der Messanlage kann eine regelmäßige Funktionsprüfung stattfinden, in welcher beispielsweise ein Dummy erfasst wird.

Das Bestimmen der Zonen kann vorteilhafterweise in Abhängigkeit von dem Erfassen des Messmittels erfolgen. Die Zonen können insbesondere dreidimensionale Blöcke, vorzugsweise mit einem Volumen von kleiner 50 cm x 50 cm x 50 cm, besonders bevorzugt von circa oder genau 10 cm x 10 cm x 10 cm, umfassen, in welche das Messgut unterteilbar ist. Vorzugsweise können die Zonen auch als Zellen bezeichnet werden. Insbesondere können die Zonen anhand des Erfassens des Messgutes geometrisch mit dem Messgut in Beziehung gesetzt sein oder geometrisch am Messgut definiert sein. Es kann vorgesehen sein, dass sich mehrere Zonen über ein Einzelteil, wie z. B. ein größeres Metallteil, des Messgutes erstrecken. Beim Bestimmen der zumindest zwei Zonen können die Zonen insbesondere aufgespannt werden. Die berührungslose Unterteilung des Messgutes kann optisch und/oder steuerungstechnisch erfolgen. Bei der optischen Unterteilung können die Zonen markiert werden, um die nachfolgende Bearbeitung zu erleichtern. Beispielsweise kann eine Randmarkierung der Zonen aufgesprüht oder als Lichtlinie aufgeleuchtet werden. Insbesondere können die nachfolgenden Verfahrensschritte auf der Unterteilung aufbauen, ohne dass eine manuelle Separierung des Messgutes notwendig ist. Vorzugsweise kann sich das Messgut während des gesamten Verfahrens in einer Messkammer der Messanlage befinden.

Das Ermitteln einer Einzelaktivität kann vorzugsweise für jede der Zonen oder für mehrere ausgewählte Zonen erfolgen. Dadurch kann insbesondere jeder Zone eine separate Einzelaktivität zugeordnet werden. Ferner kann das Bewerten der jeweiligen Einzelaktivität zur Beurteilung einer Freigebbarkeit des Messgutes für jede der Zonen erfolgen. Es ist denkbar, dass in Abhängigkeit von dem Bewerten der Einzelaktivtäten das Bestimmen von Zonen mit einer geänderten Zonengröße wiederholt wird, insbesondere wenn die Freigebbarkeit beim Bewerten der Einzelaktivitäten nicht erreicht wird. Vorzugsweise kann überprüft werden, ob eine Zonengröße beim wiederholten Bestimmen der Zonen reduzierbar ist. In Abhängigkeit von dem wiederholten Bestimmten der Zonen können die nachfolgenden Verfahrensschritte, insbesondere das Ermitteln und Bewerten der Einzelaktivitäten, wiederholt werden.

Für das Ermitteln der Einzelaktivität für zumindest eine der Zonen kann eine Messung der auftretenden Radioaktivität erfolgen. Anhand der gemessenen Radioaktivität kann die Einzelaktivität der Zone oder den Zonen zugeordnet werden. Beispielsweise kann eine Messkammer, in welcher das Messgut positioniert ist, mehrere Detektoren zum Messen von radioaktiver Strahlung aufweisen. Mehrere Einzelaktivitäten für verschiedene Zonen können anhand mehrerer Einzelmessungen der Strahlung oder anhand einer Gesamtmessung durch die Detektoren bestimmt werden. Die gemessene Strahlung kann den einzelnen Zonen zugeordnet werden. Unter der Einzelaktivität kann insbesondere eine radioaktive Aktivität, d. h. insbesondere eine Zerfallsrate, für die einzelnen Zonen verstanden werden. Insbesondere beschreibt die Einzelaktivität somit die Strahlung einer bestimmten Zone. Vorzugsweise repräsentiert die Einzelaktivität die Anzahl der Kernzerfälle pro Zeitintervall in der jeweiligen Zone. Die Einzelaktivität kann beispielsweise in Becquerel angegeben werden. Das Ermitteln der radioaktiven Einzelaktivität kann insbesondere eine Abschätzung der Einzelaktivität umfassen. Beispielsweise kann für jede der Zonen eine Wahrscheinlichkeit ermittelt werden, dass ein bestimmtes Photon, welches beim Messen der Strahlung durch die Detektoren detektiert wurde, aus der jeweiligen Zone entstammt. Dazu kann eine numerische Analyse, insbesondere in Form einer Conditional-Entropy-Maximization (CEM), durchgeführt werden, um die Einzelaktivität anhand der gemessenen Strahlung zu ermitteln.

Beim Bewerten der Einzelaktivität kann vorzugsweise überprüft werden, ob der Teil des Messgutes, der sich innerhalb der jeweiligen, der Einzelaktivität zugeordneten Zone befindet, freigabefähig ist. Somit kann das Verfahren insbesondere in eine Freimessung des Messgutes integriert sein. Beispielsweise kann das Bewerten der Einzelaktivität eine Entscheidungsmessung für die jeweilige Zone umfassen. Insbesondere kann für jede der Zonen anhand der jeweiligen Einzelaktivität eine separate Entscheidungsmessung durchgeführt und/oder eine separate Freigabeentscheidung getroffen werden.

Es kann vorgesehen sein, dass auf Basis der Bewertung der Einzelaktivität eine Einzelfreigabe erfolgt, bei welcher jede einzelne Zone individuell freigegeben wird. Ferner ist es denkbar, dass auf Basis der Bewertung der Einzelaktivität eine Gesamtentscheidung über die Freigabe des Messgutes als Ganzes erfolgt. Weiterhin ist es denkbar, dass die Bewertung der Einzelaktivität als Bericht, insbesondere in Form einer Bildschirmausgabe, eines Ausdrucks oder eines Datenpakets, einem Benutzer zur Verfügung gestellt wird. Beispielsweise kann der Bericht mittels eines, insbesondere elektronischen, Datenträgers an dem Messgut angeordnet werden.

Somit kann das Messgut, insbesondere automatisch, in Zonen unterteilt und zumindest teilweise einzeln bewertet werden. Dadurch ist es möglich, dass sich die Bewertung auf die einzelnen Zonen bezieht. Dadurch kann die Genauigkeit der Bewertung verbessert werden. Beispielsweise können gezielt freigabebehindernde Teile des Messgutes aussortiert werden, bevor eine Freigabe erfolgt. Ferner kann dadurch eine große Menge Messgut gleichzeitig und/oder in einem einzigen Verfahrensdurchlauf hinsichtlich seiner Freigabefähigkeit bewertet werden. Dadurch kann ein Freigabeprozess für das Messgut kürzer ausgestaltet sein, sodass Zeit und Kosten eingespart werden können. Durch die verbesserte Bewertung kann ferner beispielsweise eine Orientierungsmessung eingespart werden. Die Freigebbarkeit kann über die weitere Verarbeitung des Messgutes, insbesondere in Bezug auf dessen Wiederverwertung oder Einlagerung, entscheiden. Insbesondere kann durch das Verfahren vorzugsweise eine kontaminierte, nicht-freigebbare Abfallmenge, d. h. eine einem Endlager zuzuführende Abfallmenge, reduziert werden, wenn die Bewertung und Freigabe für Teile des Messgutes separat erfolgt.

Es ist ferner bei einem erfindungsgemäßen Verfahren denkbar, dass es sich bei den Zonen um virtuelle Zonen handelt, insbesondere wobei die Zonen anhand eines Koordinatensystems für das Messgut bestimmt werden. Beispielsweise können die Zonen anhand eines virtuellen Gitternetzes unterteilt werden. Somit kann das Bestimmen der Zonen numerisch erfolgen. Dabei kann das Gitternetz Knoten aufweisen, für welche eine Berechnung der Aktivität erfolgt. Anhand der Knoten können die Einzelaktivitäten für die anliegenden Zonen, insbesondere durch Mittelwertbildung, bestimmt werden kann. Das Koordinatensystem kann fest in der Messkammer orientiert sein oder dynamisch für das erfasste Messgut erstellt werden. Vorzugsweise erfolgen das Erfassen des Messgutes und das Bestimmen der Zonen während sich das Messgut in einem Einheitsbehälter, wie z. B. einer Gitterbox, befindet. Dadurch kann das Volumen des Messgutes vorgegeben sein. Beispielsweise kann das Volumen des Messgutes anhand der Abmaße, wie der Höhe und/oder der Grundfläche, des Einheitsbehälters berechnet werden.

Ferner kann bei einem erfindungsgemäßen Verfahren vorteilhafterweise vorgesehen sein, dass das Verfahren folgende Schritte umfasst:
- Ermitteln einer radioaktiven Gesamtaktivität für das Messgut, insbesondere durch ein Gesamtbewertungsmodul der Steuereinheit,
- Bewerten der Gesamtaktivität, insbesondere anhand zumindest eines Gesamtgrenzwertes zur Beurteilung einer Freigebbarkeit des Messgutes,
vorzugsweise wobei das Bestimmen der Zonen nach dem Bewerten der Gesamtaktivität erfolgt. Das Bewerten der Gesamtaktivität kann durch das Gesamtbewertungsmodul der Steuereinheit erfolgen. Insbesondere kann vorgesehen sein, dass das Bestimmen der Zonen erfolgt, wenn Messgut auf Grundlage der Bewertung der Gesamtaktivität nicht freimessbar ist. Das Ermitteln der Gesamtaktivität kann vorzugsweise eine Messung der Strahlung, insbesondere in Form einer Gesamt-Gamma-Messung, umfassen. Dabei kann das Ermitteln der Gesamtaktivität für das Messgut analog zum Ermitteln der Einzelaktivität erfolgen. Beim Bewerten der Gesamtaktivität kann die Gesamtaktivität mit dem Gesamtgrenzwert oder mit mehreren Gesamtgrenzwerten verglichen werden. Insbesondere kann der Gesamtgrenzwert eine Nachweisgrenze, eine Vertrauensgrenze und/oder eine Erkennungsgrenze umfassen. Vorzugsweise kann die Gesamtaktivität beim Bewerten der Gesamtaktivität mit der Nachweisgrenze, der Vertrauensgrenze und der Erkennungsgrenze zur Beurteilung der Freigebbarkeit des Messgutes verglichen werden. Beim Vergleich mit der Erkennungsgrenze kann festgestellt werden, ob das Messgut überhaupt radioaktiv ist oder nicht. Beim Vergleich mit der Nachweisgrenze kann festgestellt werden, ob das für die Messung der Strahlung vorgesehene Messverfahren vorbestimmten Anforderungen genügt, um zur Beurteilung der Freigebbarkeit herangezogen zu werden. Die Vertrauensgrenze ist insbesondere ein Maß für eine statistische Streuung und/oder Messunsicherheit.

Es ist ferner bei einem erfindungsgemäßen Verfahren denkbar, dass das Bewerten der Einzelaktivität anhand zumindest eines Zonengrenzwertes zur Beurteilung der Freigebbarkeit des Messgutes erfolgt. Es kann vorgesehen sein, dass sich der Zonengrenzwert von dem Gesamtgrenzwert unterscheidet oder der Zonengrenzwert gleich dem Gesamtgrenzwert ist. Ferner unterscheiden sich die Bewertungen der Gesamtaktivität und der Einzelaktivität insbesondere in der Bezugsgröße, d. h. beispielsweise dadurch, dass sich die Einzelaktivität und die Gesamtaktivität unterscheiden können. Beim Bewerten der Einzelaktivität kann die Einzelaktivität mit dem Zonengrenzwert oder mit mehreren Zonengrenzwerten verglichen werden. Insbesondere kann der Zonengrenzwert eine Nachweisgrenze, eine Vertrauensgrenze und/oder eine Erkennungsgrenze umfassen. Vorzugsweise kann für jede Zone eine Einzelaktivität anhand eines individuellen oder anhand eines einheitlichen Zonengrenzwertes bewertet werden. Der Zonengrenzwert und/oder der Gesamtgrenzwert kann vorzugsweise einen Freigabe-Grenzwert bilden.

Vorzugsweise kann bei einem erfindungsgemäßen Verfahren vorgesehen sein, dass das Verfahren folgenden Schritt umfasst:
- Erkennen zumindest eines Aktivitätsbereiches im Messgut,
wobei der Aktivitätsbereich beim Bestimmen der Zonen berücksichtigt wird, insbesondere sodass eine, d. h. insbesondere genau eine, der Zonen den Aktivitätsbereich einschließt. Der Aktivitätsbereich kann insbesondere eine Strahlungsquelle innerhalb des Messgutes umfassen. Unter dem Erkennen des zumindest einen Aktivitätsbereiches kann insbesondere ein Lokalisieren einer Strahlungsquelle innerhalb des Messgutes verstanden werden. Beispielsweise kann ein erhöht strahlendes Teil innerhalb des Messgutes den Aktivitätsbereich oder den Ursprung des Aktivitätsbereiches bilden. Der Aktivitätsbereich kann insbesondere durch Positionieren des Messgutes erkannt werden. Wird das Messgut beispielsweise auf einen bestimmten Detektor, insbesondere in eine andere Position, zubewegt, kann eine Änderung einer Strahlungsintensität an dem Detektor gemessen und zum Erkennen des Aktivitätsbereiches ausgewertet werden. Dadurch kann eine Genauigkeit beim Erkennen des Aktivitätsbereiches verbessert werden. Wenn die Zonen derart bestimmt werden, dass eine der Zonen den Aktivitätsbereich einschließt, kann sichergestellt sein, dass die Einzelaktivität für die jeweilige Zone den entsprechenden Aktivitätsbereich, insbesondere vollständig, berücksichtigt. Vorzugsweise können mehrere Aktivitätsbereiche im Messgut erkannt werden, die beim Bestimmen der Zonen berücksichtigt werden, vorzugsweise sodass jeweils ein Aktivitätsbereich durch eine Zone eingeschlossen ist. Dadurch können mehrere Aktivitätsbereiche, die bei der Bewertung der Gesamtaktivität gemeinsam betrachtet werden, d. h. insbesondere deren Strahlung kumuliert in die Gesamtaktivität einfließt, durch das Bestimmen der Zonen beim Bewerten der Einzelaktivitäten der Zonen getrennt betrachtet werden.

Im Rahmen der Erfindung ist es ferner denkbar, dass beim Bewerten der Einzelaktivität für die zumindest eine Zone eine Hintergrundaktivität zumindest einer weiteren Zone berücksichtigt wird, insbesondere wobei ein Wert einer oberen Vertrauensgrenze der Einzelaktivität zur Beurteilung der Freigebbarkeit des Messgutes in Abhängigkeit von der Hintergrundaktivität erhöht wird. Die Hintergrundaktivität kann einen Einfluss, insbesondere eine Aktivität, umliegender Zonen umfassen. Beispielsweise kann durch die Berücksichtigung der Hintergrundaktivität eine Strahlung berücksichtigt werden, die aufgrund weiterer Aktivitätsbereiche außerhalb der jeweiligen Zone auftritt. Das Ermitteln der Einzelaktivität kann vorzugsweise auf einer Wahrscheinlichkeitsrechnung beruhen, wobei der Einzelaktivität vorzugsweise der wahrscheinlichste Wert zugeordnet wird. Dabei kann die Einzelaktivität eine Unsicherheit aufweisen, die durch ein Vertrauensintervall beschrieben sein kann. Die Vertrauensgrenze kann die obere Grenze des Vertrauensintervalls bilden. Vorzugsweise ist dabei vorgesehen, dass der tatsächlich vorliegende Wert mit einer Wahrscheinlichkeit, vorzugsweise von 95% oder mehr, kleiner oder gleich der oberen Vertrauensgrenze ist. Somit kann insbesondere die obere Vertrauensgrenze mit dem Zonengrenzwert verglichen werden. Wenn die obere Vertrauensgrenze kleiner als der Zonengrenzwert ist, kann insbesondere darauf geschlossen werden, dass die Einzelaktivität der jeweiligen Zone mit einer Wahrscheinlichkeit, vorzugsweise von 95% oder mehr, unter dem Zonengrenzwert liegt. Dadurch kann das Messgut freigebbar sein. Somit kann die Hintergrundaktivität das Ermitteln der Einzelaktivität konservativer gestalten, d. h. den gemessenen Wert gegenüber dem realen Wert erhöhen. Gleichzeitig kann die Hintergrundaktivität jedoch eine Messunsicherheit, insbesondere hinsichtlich der statistischen Verteilung der Aktivität im Messgut, darstellen, die durch die Erhöhung der oberen Vertrauensgrenze berücksichtigt werden kann.

Weiterhin kann bei einem erfindungsgemäßen Verfahren vorteilhafterweise vorgesehen sein, dass beim Ermitteln und/oder Bewerten der Einzelaktivität und/oder der Gesamtaktivität Materialparameter des Messgutes berücksichtigt werden, insbesondere wobei die Materialparameter zumindest eine oder eine Kombination mehrerer, vorzugsweise aller, der nachfolgenden Materialeigenschaften umfassen:
- Masse des Messgutes,
- Dichte des Messgutes,
- Volumen des Messgutes,
- Materialtyp des Messgutes,
- Geometrie des Messgutes.

Die Materialparameter können anhand einer Benutzereingabe und/oder anhand einer Materialdatenbank bestimmt werden. Beispielsweise können die Materialparameter manuell an der Messanlage eingegeben werden und/oder von der Materialdatenbank abgerufen werden. Die Materialdatenbank kann Teil der Messanlage und/oder auf einem externen Server gespeichert sein. Insbesondere können zum Bestimmen der Materialparameter Voruntersuchungen am Messgut und/oder an einem Referenzmessgut durchgeführt werden. Beispielsweise können die Materialparameter auf Erfahrungswerten basieren. Die Masse des Messgutes kann insbesondere durch Wiegen des Messgutes in der Messanlage bestimmt werden. Die Dichte des Messgutes kann aus der Masse und dem Volumen berechnet werden. Das Volumen des Messgutes kann anhand eines Einheitsbehälters bestimmt werden, in welchem sich das Messgut befindet. Der Materialtyp des Messgutes kann eine Materialklassifizierung anhand der physikalischen Eigenschaften des Messgutes umfassen. Beispielsweise kann der Materialtyp "Metall", "Bauschutt" oder dergleichen sein. Die Geometrie des Messgutes kann aus dem Materialtyp abgeleitet werden. Beispielsweise kann aus dem Materialtyp "Bauschutt" geschlossen werden, dass es sich bei dem Messgut um Schüttgut handelt.

Es ist ferner bei einem erfindungsgemäßen Verfahren denkbar, dass beim Bestimmen der Zonen eine minimale Zonengröße berücksichtigt wird, die in Abhängigkeit von den Materialparametern bestimmt wird. Die minimale Zonengröße kann insbesondere eine Mindestgrundfläche und/oder ein Mindestvolumen der Zonen umfassen. Insbesondere kann die minimale Zonengröße anhand mehrerer Materialparameter, z. B. des Volumens und/oder der Geometrie des Messgutes, berechnet werden. Dabei kann die minimale Zonengröße derart vorgegeben werden, dass der Teil des Messgutes, der innerhalb einer der Zonen mit der minimalen Zonengröße liegt, eine vorbestimmte Mittelungsfläche aufweist. Die Mittelungsfläche kann eine Grundlage für eine flächenbezogene Auswertung der Einzelaktivität und/oder der Gesamtaktivität bilden.

Weiterhin kann bei einem erfindungsgemäßen Verfahren vorteilhafterweise vorgesehen sein, dass zum Ermitteln und/oder Bewerten der Einzelaktivität und/oder der Gesamtaktivität ein flächenbezogener und/oder ein massenbezogener Aktivitätswert in Abhängigkeit von den Materialparametern berechnet wird. Dadurch kann auf Grundlage beim Bewerten der Einzelaktivität und/oder der Gesamtaktivität eine Flächenfreigabe und/oder eine Massenfreigabe erfolgen. Der flächenbezogene Aktivitätswert kann insbesondere auf eine Oberfläche des Messgutes bezogen sein. Der massenbezogene Aktivitätswert kann insbesondere auf eine Masse des Messgutes bezogen sein. Für die Einzelaktivität kann die Oberfläche und/oder die Masse des Messgutes innerhalb der jeweiligen Zone anhand der Materialparameter geschätzt oder berechnet werden. Für die Gesamtaktivität kann die gesamte Oberfläche und/oder die Masse des Messgutes anhand der Materialparameter geschätzt oder berechnet werden. Der flächenbezogene Aktivitätswert kann insbesondere auf eine vorbestimmte Mittelungsfläche bezogen sein und/oder durch eine vorbestimmte Mittelungsfläche normiert sein. Beispielsweise kann für die vorbestimmte Mittelungsfläche ein Minimalwert und/oder ein Maximalwert, beispielsweise eine Mittelungsfläche bis zu 300 cm² oder bis zu 1000 cm², vorgegeben sein.

Weiterhin kann bei einem erfindungsgemäßen Verfahren vorteilhafterweise vorgesehen sein, dass eine Freigabe des Messgutes in Abhängigkeit von der Bewertung der Einzelaktivität erfolgt und/oder dass in Abhängigkeit von der Bewertung der Einzelaktivität nach einer Sortierung des Messgutes eine Neubewertung des sortierten Messgutes erfolgt. Die Sortierung kann insbesondere in Abhängigkeit von der Bewertung der einzelnen Zonen erfolgen. Weiterhin kann die Sortierung manuell und/oder automatisch durchgeführt werden. Nach dem Sortieren kann eine, insbesondere erneute, Dekontamination des Messgutes vorgesehen sein. Beispielsweise kann Material des Messgutes aus freigebbaren Zonen unmittelbar nach der Sortierung freigegeben werden oder erneut bewertet werden. Die Freigabe des Messgutes kann insbesondere eine Zuführung des Messgutes zu einem, insbesondere konventionellen, Abfallstrom, wie beispielsweise einem Recycling oder einer Abfallverbrennung, verstanden werden. Wenn das Messgut nicht freigebbar ist, kann das Messgut einer zusätzlichen Behandlung, wie beispielsweise einer Dekontamination, und/oder für eine Zuführung zu einem Endlager vorbereitet werden. Durch die Sortierung und/oder Freigabe kann eine Zuführung von Reststoffen zu konventionellen Abfallströmen erleichtert werden.

Gemäß einem weiteren Aspekt der Erfindung ist ein Computerprogrammprodukt vorgesehen. Das Computerprogrammprodukt umfasst Befehle, die bei einer Ausführung, insbesondere des Computerprogrammproduktes, durch eine Steuereinheit die Steuereinheit veranlassen, ein erfindungsgemäßes Verfahren auszuführen.

Somit bringt ein erfindungsgemäßes Computerprogrammprodukt die gleichen Vorteile mit sich, wie sie bereits ausführlich mit Bezug auf ein erfindungsgemäßes Verfahren beschrieben worden sind. Das Computerprogrammprodukt kann als computerlesbarer Anweisungscode in jeder geeigneten Programmiersprache wie beispielsweise in JAVA, C++, C# und/oder Python implementiert sein. Das Computerprogrammprodukt kann auf einem computerlesbaren Speichermedium wie einer Datendisk, einem Wechsellaufwerk, einem flüchtigen und/oder nichtflüchtigen Speicher, oder einem eingebauten Speicher/Prozessor abgespeichert sein. Der Anweisungscode kann die Steuereinheit derart programmieren, dass die gewünschten Funktionen ausgeführt werden. Ferner kann das Computerprogrammprodukt in einem Netzwerk, wie beispielsweise dem Internet, bereitgestellt werden und/oder sein, von dem es bei Bedarf von einem Nutzer heruntergeladen werden kann. Das Computerprogrammprodukt kann sowohl mittels einer Software, als auch mittels einer oder mehrerer spezieller elektronischer Schaltungen, d. h. in Hardware oder in beliebig hybrider Form, d. h. mittels Software-Komponenten und Hardware-Komponenten, realisiert werden und/oder sein.

Gemäß einem weiteren Aspekt der Erfindung ist eine Messanlage zur Bewertung eines, vorzugsweise zumindest teilweise radioaktiven, Messgutes vorgesehen. Die Messanlage weist eine Messvorrichtung zur Aufnahme des Messgutes auf. Die Messvorrichtung umfasst mehrere Detektoren zum Messen einer Radioaktivität des Messgutes. Weiterhin weist die Messanlage ein Erfassungsmittel zum Erfassen des Messgutes und eine Steuereinheit auf. Die Steuereinheit umfasst ein Unterteilungsmodul zum Bestimmen von zumindest zwei Zonen zur berührungslosen Unterteilung des Messgutes in der Messvorrichtung und ein Einzelbewertungsmodul, das zum Ermitteln einer radioaktiven Einzelaktivität für zumindest eine der Zonen und zum Bewerten der Einzelaktivität für die zumindest eine Zone zur Beurteilung einer Freigebbarkeit des Messgutes ausgebildet ist.

Somit bringt eine erfindungsgemäße Messanlage die gleichen Vorteile mit sich, wie sie bereits ausführlich mit Bezug auf ein erfindungsgemäßes Verfahren und/oder ein erfindungsgemäßes Computerprogrammprodukt beschrieben worden sind. Vorzugsweise kann die Messanlage auch als Freimessanlage bezeichnet werden. Insbesondere kann vorgesehen sein, dass die Steuereinheit zum Ausführen eines erfindungsgemäßen Computerprogrammproduktes ausgebildet ist. Die Steuereinheit kann eine Elektronik und/oder einen Prozessor, insbesondere einen Mikroprozessor umfassen. Die Module, d. h. insbesondere das Unterteilungsmodul und/oder das Einzelbewertungsmodul, können durch elektronische Schaltungen, Speicherbereiche, insbesondere mit abgespeichertem Programmcode, und/oder dergleichen gebildet sein. Die Messvorrichtung kann insbesondere eine Messkammer zur Aufnahme des Messgutes aufweisen. Dabei können die Detektoren innerhalb der Messkammer angeordnet sein. Die Detektoren können insbesondere zum Erkennen und/oder Zählen von Photonen ausgestaltet sein, die auf die Detektoren treffen. Insbesondere kann durch die Detektoren eine 4-Pi-Detektion zum Finden der Aktivitätsbereiche ausführbar sein. Vorzugsweise ist die Messkammer gegenüber einer Strahlung abgeschirmt. Dadurch kann eine Sicherheit der Anlage gegenüber Strahlung des Messgutes verbessert sein. Gleichzeitig kann ein Einfluss äußerer Strahlung auf eine gemessene Strahlung reduziert oder verhindert sein.

Im Rahmen der Erfindung ist es ferner denkbar, dass die Messvorrichtung ein Bewegungsmittel für eine Positionierung des Messgutes relativ zu den Detektoren aufweist, wobei die Steuereinheit ein Bereichserkennungsmodul zum Erkennen zumindest eines Aktivitätsbereiches im Messgut in Abhängigkeit von zumindest einer Position, vorzugsweise zwei oder mehr Positionen, des Messgutes in der Messvorrichtung, vorzugsweise in der Messkammer, umfasst. Bei der Positionierung kann das Messgut relativ zu den Detektoren in zumindest eine Position, vorzugsweise in zumindest zwei unterschiedliche Positionen, in der Messvorrichtung bringbar sein, um das Erkennen zumindest eines Aktivitätsbereiches oder mehrerer Aktivitätsbereiche durchzuführen. Auch ist es denkbar, dass das Erkennen des Aktivitätsbereiches während einer Relativbewegung des Messgutes zu den Detektoren erfolgt. Weiterhin kann es ausreichend sein, das Messgut in eine Messposition zu bringen, um die lokalisierten Aktivitätsdaten zu erfassen. Das Bewegungsmittel kann einen Antrieb, beispielsweise in Form eines Elektromotors und/oder eines Pneumatikantriebs, umfassen. Vorzugsweise ist das Bewegungsmittel dazu ausgebildet, das Messgut innerhalb der Messvorrichtung, insbesondere innerhalb der Messkammer, zwischen den Positionen zu bewegen. Dazu kann das Bewegungsmittel ein Fördermittel, wie einen Rollenförderer mit antreibbaren Rollen oder ein Förderband, aufweisen. Es ist jedoch ebenso denkbar, dass das Bewegungsmittel dazu ausgebildet ist, die Detektoren relativ zum Messgut zu bewegen. Dabei kann das Messgut innerhalb der Messkammer starr positionierbar sein. Zum Bewegen der Detektoren kann das Bewegungsmittel beispielsweise einen Linearantrieb umfassen. Durch eine Umpositionierung des Messgutes relativ zu den Detektoren kann die Genauigkeit der Erfassung der Aktivitätsdaten, insbesondere durch Lokalisierung der Aktivitätsbereiche, verbessert sein.

Weiterhin kann bei einer erfindungsgemäßen Messanlage vorteilhafterweise vorgesehen sein, dass eine Benutzerschnittstelle zur Eingabe von Materialparametern des Messgutes und/oder zur Ausgabe der Bewertung der Einzelaktivität vorgesehen ist. Die Benutzerschnittstelle kann beispielsweise ein Display, insbesondere in Form eines Touch-Displays, und/oder weitere Eingabemittel und/oder Ausgabemittel umfassen. Weiterhin kann die Benutzerschnittstelle eine Datenkommunikationsschnittstelle, wie z. B. eine Funkschnittstelle, zur Datenübermittlung umfassen. Dadurch kann die Eingabe der Materialparameter und/oder die Ausgabe der Bewertung kontaktlos erfolgen. Somit kann eine Kommunikation des Benutzers mit der Messanlage ermöglicht sein, um die Freigabe des Messgutes zu beschleunigen und/oder zu verbessern.

Es ist ferner bei einer erfindungsgemäßen Messanlage denkbar, dass die Steuereinheit zum Ausführen eines erfindungsgemäßen Verfahrens ausgebildet ist. Beispielsweise kann die Steuereinheit dazu ausgebildet sein, weitere Komponenten der Messanlage anzusteuern, um die Verfahrensschritte, insbesondere automatisch, auszuführen.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen schematisch:
- Figur 1: eine erfindungsgemäße Messanlage zur Bewertung eines, insbesondere zumindest teilweise radioaktiven, Messgutes,
- Figur 2: ein erfindungsgemäßes Computerprogrammprodukt und ein erfindungsgemäßes Verfahren zur Bewertung des Messgutes in schematischer Darstellung der Verfahrensschritte,
- Figur 3: mehrere Zonen des Messgutes bei dem Verfahren, und
- Figur 4: Bewertungen von Aktivitäten bei dem Verfahren.

In der nachfolgenden Beschreibung zu einigen Ausführungsbeispielen der Erfindung werden für die gleichen technischen Merkmale auch in unterschiedlichen Ausführungsbeispielen die identischen Bezugszeichen verwendet.

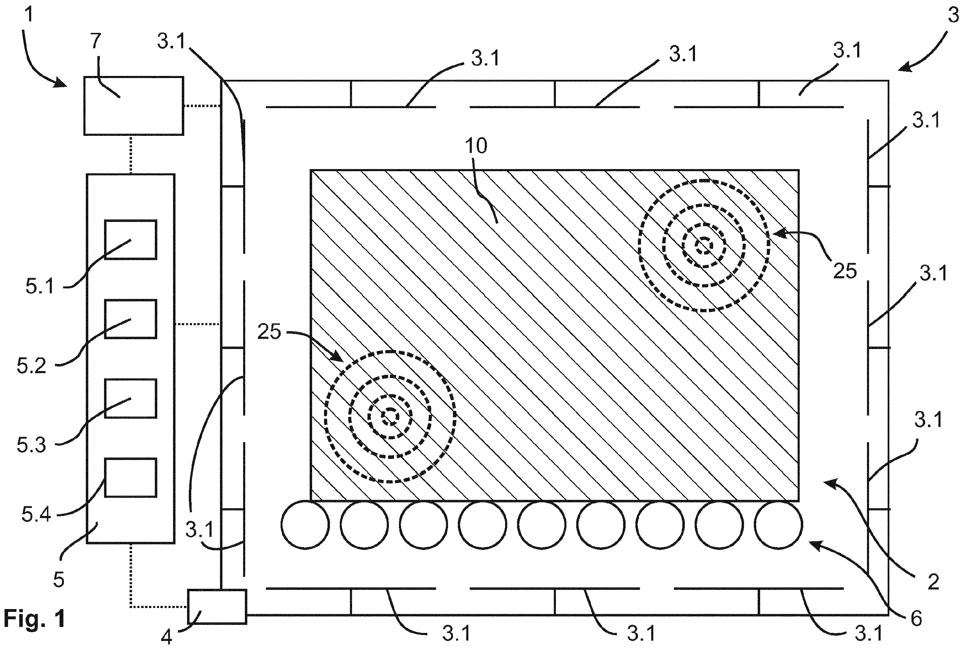

Figur 1 zeigt eine erfindungsgemäße Messanlage 1 zur Bewertung eines, insbesondere zumindest teilweise radioaktiven, Messgutes 10. Die Messanlage 1 weist eine Messvorrichtung 3 mit einer Messkammer 2 zur Aufnahme des Messgutes 10 auf. Die Messkammer 2 ist vorzugsweise gegenüber einer radioaktiven Strahlung abgeschirmt, sodass die Strahlung des Messgutes 10 nicht oder nur reduziert nach außen dringen kann. Weiterhin weist die Messvorrichtung 3 mehrere Detektoren 3.1 zum Messen einer Radioaktivität, d. h. insbesondere einer Strahlung, des Messgutes 10 auf. Die Detektoren 3.1 sind insbesondere an den Innenseiten der Messkammer 2 in der Messkammer 2 verteilt angeordnet. Weiterhin ist ein Erfassungsmittel 4 vorgesehen, durch welches das Messgut 10 in der Messkammer 2 erfasst werden kann. Das Erfassungsmittel 4 kann zum, insbesondere optischen, Erkennen des Messgutes 10 ausgebildet sein. Es ist denkbar, dass das Erfassungsmittel 4 eine Waage umfasst, durch welche ein Materialparameter 13 in Form einer Masse des Erfassungsmittels 4 erkannt und/oder durch welche das Messgut 10 in der Messkammer 2 lokalisierbar ist. Zusätzlich oder alternativ kann das Erfassungsmittel 4 zum datentechnischen Erkennen des Messgutes 10 ausgebildet sein, beispielsweise indem ein Benutzer die Positionierung des Messgutes 10 in der Messkammer 10 bestätigt. Weiterhin weist die Messanlage 1 eine Steuereinheit 5 zum Ausführen eines erfindungsgemäßen Verfahrens 100 zur Bewertung des Messgutes 10 auf.

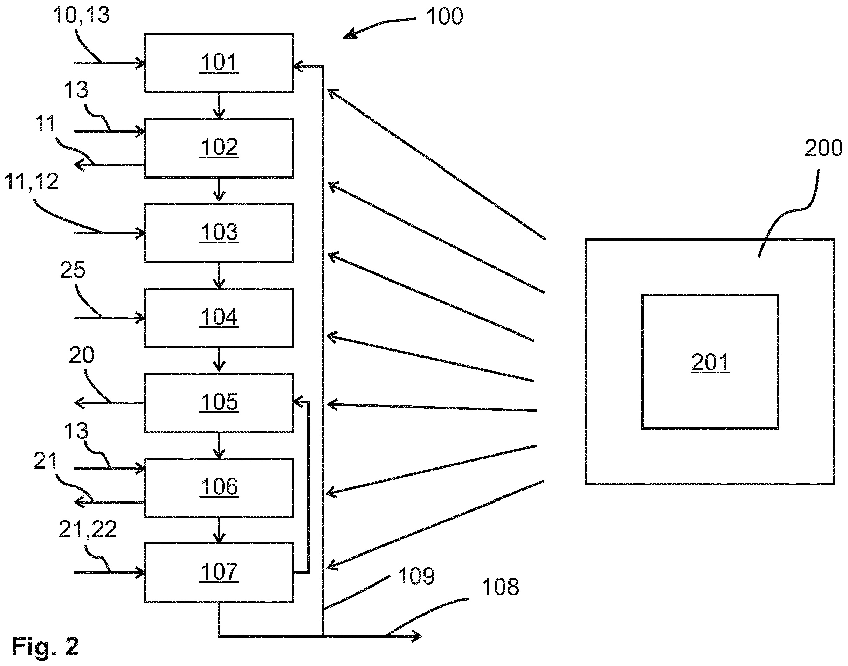

Das Verfahren 100 ist in Figur 2 in schematischer Darstellung von Verfahrensschritten dargestellt. Dabei kann ein erfindungsgemäßes Computerprogrammprodukt 200 vorgesehen sein, das Befehle 201 umfasst, die bei einer Ausführung durch die Steuereinheit 5 die Steuereinheit 5 dazu veranlassen das Verfahren 100 auszuführen. Das Verfahren 100 umfasst ein Erfassen 101 des Messgutes 10, insbesondere durch das Erfassungsmittel 4. Vorzugsweise können beim Erfassen 101 des Messgutes 10 mehrere Materialparameter 13 in Form einer Masse, einer Dichte, eines Volumens, eines Materialtyps und/oder einer Geometrie des Messgutes 10 erkannt werden. Die Materialparameter 13 können zumindest teilweise durch eine Benutzerschnittstelle 7 der Steuereinheit 5 zur Verfügung gestellt werden. Weiterhin kann beim Erfassen 101 des Messgutes 10 eine radiologische Charakterisierung des Messgutes 10 erfolgen.

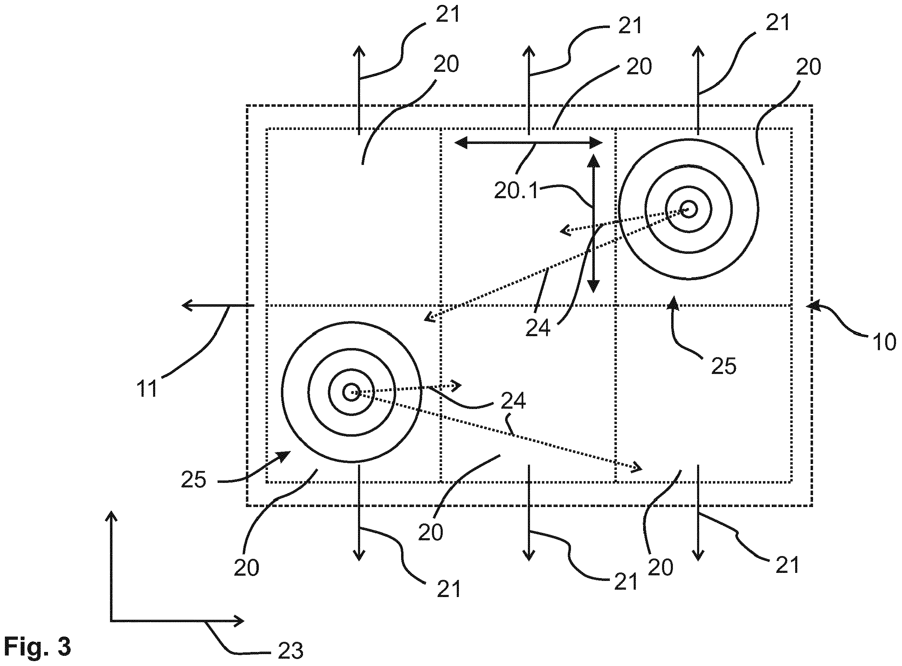

Durch die Detektoren 3.1 kann ferner eine Aktivität des Messgutes 10 in Form einer radioaktiven Strahlung gemessen werden. Anhand dessen erfolgt ein Ermitteln 102 einer radioaktiven Gesamtaktivität 11 für das Messgut 10. Wie in Figur 3 dargestellt, repräsentiert die Gesamtaktivität 11 die Aktivität des gesamten Messgutes 10. Dabei kann die Gesamtaktivität 11 beispielsweise auf einen Mittelpunkt des Messgutes 10 bezogen sein. Daraufhin erfolgt ein Bewerten 103 der Gesamtaktivität 11 anhand zumindest eines Gesamtgrenzwertes 12 zur Beurteilung der Freigebbarkeit des Messgutes 10. Vorzugsweise kann das Bewerten 103 der Gesamtaktivität 11 anhand mehrerer Grenzwerte 12, insbesondere in Form einer Vertrauensgrenze, einer Erkennungsgrenze und/oder einer Nachweisgrenze, erfolgen. Zum Ermitteln 102 und/oder Bewerten 103 der Gesamtaktivität 11 wird vorzugsweise ein flächenbezogener und/oder ein massenbezogener Aktivitätswert in Abhängigkeit von den Materialparametern 13 berechnet. Dazu kann beispielsweise die Masse und/oder die Oberfläche des Messgutes 10 geschätzt und/oder berechnet werden. Das Ermitteln 102 und/oder Bewerten 103 der Gesamtaktivität 11 kann durch ein Gesamtbewertungsmodul 5.4 der Steuereinheit 5 ausgeführt werden.

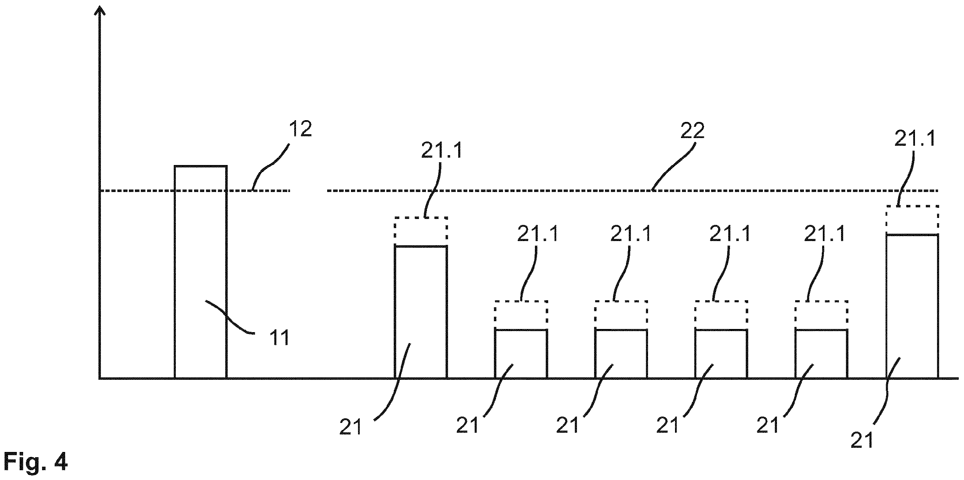

Die Bewertung 103 der Gesamtaktivität 11 anhand des Gesamtgrenzwertes 12 ist exemplarisch in Figur 4 dargestellt. Überschreitet die Gesamtaktivität 11 den Gesamtgrenzwert 12 ist das Messgut 10 insbesondere zunächst nicht freigebbar.

Daraufhin erfolgt ein Erkennen 104 zumindest eines Aktivitätsbereiches 25 im Messgut 10, vorzugsweise durch ein Bereichserkennungsmodul 5.3 der Steuereinheit 5. Bei dem Aktivitätsbereich 25 handelt es sich insbesondere um eine Strahlungsquelle im Messgut 10. Insbesondere können zumindest zwei Aktivitätsbereiche 25 im Messgut 10 erkannt werden. Zum Erkennen 104 der Aktivitätsbereiche 25 weist die Messanlage 1 ein Bewegungsmittel 6 für eine Positionierung, insbesondere durch Ausführen einer Relativbewegung, des Messgutes 10 relativ zu den Detektoren 3.1 auf. Dazu weist das Bewegungsmittel 6 ein Fördermittel mit angetriebenen Rollen zum Bewegen des Messgutes 10 in zumindest eine Position, vorzugsweise zwischen zumindest zwei oder mehr Positionen, innerhalb der Messkammer 2 auf. Es ist jedoch ebenso denkbar, dass die Detektoren 3.1 durch das Bewegungsmittel 6 relativ zum Messgut 10 bewegbar ausgebildet sind. Durch die Bewegung des Messgutes 10 kann die Strahlung des Messgutes 10 an unterschiedlichen Positionen ausgewertet werden und dadurch auf die Aktivitätsbereiche 25, insbesondere in Abhängigkeit von einem Wirkungsgrad der Detektoren 3.1, geschlossen werden.

Insbesondere in Abhängigkeit von den Aktivitätsbereichen 25 wird ein Bestimmen 105 von zumindest zwei Zonen 20, hier von sechs oder mehr Zonen 20, zur berührungslosen Unterteilung des Messgutes 10, vorzugsweise durch ein Unterteilungsmodul 5.1 der Steuereinheit 5, ausgeführt. Bei den Zonen 20 handelt es sich um virtuelle Zonen 20, die insbesondere anhand eines Koordinatensystems 23 für das Messgut 10 bestimmt werden. Das Koordinatensystem 23 kann auf die Messkammer 2 und/oder das Messgut 10 bezogen sein. Vorteilhafterweise kann beim Bestimmen 105 der Zonen 20 eine minimale Zonengröße 20.1 berücksichtigt werden, die in Abhängigkeit von den Materialparametern 13 bestimmt wird. Dadurch kann sichergestellt sein, dass die minimale Zonengröße 20.1 gesetzlichen Anforderungen, z. B. hinsichtlich der in der jeweiligen Zone 20 enthaltenen Oberfläche des Messgutes 10, genügt. Weiterhin kann das Messgut 10 derart in die Zonen 20 unterteilt werden, dass zumindest eine der Zonen 20 einen der Aktivitätsbereiche 25 einschließt, insbesondere so dass jeder der Aktivitätsbereiche 25 von einer Zone 20 eingeschlossen wird. Für zumindest eine der Zonen 20, vorzugsweise für jede der Zonen 20, erfolgt ein Ermitteln 106 einer radioaktiven Einzelaktivität 21. Wie in Figur 3 dargestellt, repräsentiert die Einzelaktivität 21 die Aktivität des gesamten Messgutes 10 in einer der Einzelaktivität 21 zugeordneten Zone. Dabei kann die zuvor gemessene Strahlung auf die Zonen 20 bezogen werden und/oder eine Strahlung kann separat für die Zonen 20 gemessen werden. Zur Beurteilung der Freigebbarkeit des Messgutes 10 erfolgt ein Bewerten 107 jeder der Einzelaktivitäten 21 für die Zonen 20. Zum Ermitteln 106 und/oder Bewerten 107 der Einzelaktivitäten 21 wird vorzugsweise ein flächenbezogener und/oder ein massenbezogener Aktivitätswert für jede der Zonen 20 in Abhängigkeit von den Materialparametern 13 berechnet.

Zum Bewerten 107 der Einzelaktivitäten 21 wird, wie in Figur 4 dargestellt, jede der Einzelaktivitäten 21 mit zumindest einem Zonengrenzwert 22 verglichen. Überschreitet die Einzelaktivität 21 den Zonengrenzwert 22, ist das Messgut 10 für die entsprechende Zone 20 nicht freigebbar. Vorzugsweise kann ein Vergleich der Einzelaktivitäten 21 mit mehreren Zonengrenzwerten 22 erfolgen. Vorzugsweise kann beim Bewerten 107 der Einzelaktivitäten 21 jeweils eine obere Vertrauensgrenze 21.1 der Einzelaktivitäten 21 zur Beurteilung der Freigebbarkeit des Messgutes 10 in Abhängigkeit von einer Hintergrundaktivität 24 erhöht werden. Bei der Hintergrundaktivität 24 kann es sich z. B. um eine Strahlung handeln, die von der weiteren Zone 20 ausgeht, beispielsweise weil die weitere Zone 20 einen Aktivitätsbereich 25 aufweist. Die Hintergrundaktivität 24 berücksichtigt insbesondere, dass die Einzelaktivitäten 21 auf eine Strahlungsmessung zurückgehen, bei der sich alle Zonen 20 in der Messkammer 2 befinden. Durch die Erhöhung der oberen Vertrauensgrenze 21.1 kann die dadurch auftretende statistische Messunsicherheit berücksichtigt werden, insbesondere ohne die Bewertung unsicherer zu machen. Somit kann beim Bewerten 107 der Einzelaktivitäten 21 insbesondere die obere Vertrauensgrenze 21.1 mit dem Zonengrenzwert 22 verglichen werden. Das Ermitteln 106 und/oder das Bewerten 107 der Einzelaktivitäten 21 kann insbesondere durch ein Einzelbewertungsmodul 5.2 der Steuereinheit 5 ausgeführt werden. Bei einer negativen Bewertung der Einzelaktivitäten 21 kann vorgesehen sein, dass das Bestimmen 105 der Zonen 20 mit einer geänderten, vorzugsweise kleineren, Zonengröße 20.1 wiederholt wird. Dazu kann eine Zulässigkeit der geänderten Zonengröße 20.1 geprüft werden.

Die Bewertung 107 kann einem Benutzer z. B. über die Benutzerschnittstelle 7 zur Verfügung gestellt werden. In Abhängigkeit von der Bewertung 107 der Einzelaktivitäten 21 kann ferner eine zumindest teilweise oder vollständige Freigabe 108 des Messgutes 10 erfolgen. Ist das Messgut 10 zumindest teilweise nicht freigabefähig, kann nach einer Sortierung, vorzugsweise nach Zonen 20, des Messgutes 10 eine Neubewertung 109 des sortierten Messgutes 10 erfolgen. Bei der Neubewertung 109 können einzelne oder alle Schritte des Verfahrens 100 für das sortierte Messgut 10 wiederholt werden.

Wie in Figur 4 gezeigt, kann die Gesamtaktivität 11 durch das erfindungsgemäße Verfahren 100 somit auf die Zonen 20, d. h. insbesondere kleinere Teilbereiche des Messgutes 10, aufgeteilt werden. Dabei kann jede der Einzelaktivitäten 21 kleiner sein, als die Gesamtaktivität 11, sodass ein beim Bewerten 103 der Gesamtaktivität 11 nicht freigebbares Messgut 10 sich bei der Bewertung 107 der Einzelaktivitäten 21 als, insbesondere vollständig, freigebbar herausstellen kann. Beispielsweise kann durch die Betrachtung der Zonen 20 nachgewiesen werden, dass eine hohe Gesamtaktivität 11 auf eine Verteilung niedrigerer Einzelaktivitäten 21, z. B. aufgrund mehrerer Aktivitätsbereiche 25 zurückgeführt werden kann. Dadurch kann daher insbesondere nachweisbar sein, dass das Messgut 10 den Anforderungen für eine Freigabe 108 genügt.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

### Bezugszeichenliste

- 1: Messanlage
- 2: Messkammer
- 3: Messvorrichtung
- 3.1: Detektoren
- 4: Erfassungsmittel
- 5: Steuereinheit
- 5.1: Unterteilungsmodul
- 5.2: Einzelbewertungsmodul
- 5.3: Bereichserkennungsmodul
- 5.4: Gesamtbewertungsmodul
- 6: Bewegungsmittel
- 7: Benutzerschnittstelle

- 10: Messgut
- 11: Gesamtaktivität
- 12: Gesamtgrenzwert
- 13: Materialparameter

- 20: Zonen
- 20.1: Zonengröße
- 21: Einzelaktivität
- 22: Zonengrenzwert
- 23: Koordinatensystem
- 24: Hintergrundaktivität
- 25: Aktivitätsbereich

- 100: Verfahren
- 101: Erfassen von 10
- 102: Ermitteln von 11
- 103: Bewerten von 11
- 104: Erkennen von 25
- 105: Bestimmen von 20
- 106: Ermitteln von 21
- 107: Bewerten von 21
- 108: Freigabe von 10
- 109: Neubewertung von 10

- 200: Computerprogrammprodukt
- 201: Befehle

## Patentansprüche

1. Verfahren (100) zur Bewertung eines, insbesondere zumindest teilweise radioaktiven, Messgutes (10)
umfassend die folgenden Schritte:
- Erfassen (101) des Messgutes (10),
- Bestimmen (105) von zumindest zwei Zonen (20) zur berührungslosen Unterteilung des Messgutes (10),
- Ermitteln (106) einer radioaktiven Einzelaktivität (21) für zumindest eine der Zonen (20),
- Bewerten (107) der Einzelaktivität (21) für die zumindest eine Zone (20) zur Beurteilung einer Freigebbarkeit des Messgutes (10).

2. Verfahren (100) nach Anspruch 1,
**dadurch gekennzeichnet,**
**dass** es sich bei den Zonen (20) um virtuelle Zonen (20) handelt, insbesondere wobei die Zonen (20) anhand eines Koordinatensystems (23) für das Messgut (10) bestimmt werden.

3. Verfahren (100) nach einem der vorhergehenden Ansprüche,
**dadurch gekennzeichnet,**
**dass** das Verfahren (100) folgende Schritte umfasst:
- Ermitteln (102) einer radioaktiven Gesamtaktivität (11) für das Messgut (10),
- Bewerten (103) der Gesamtaktivität (11) anhand zumindest eines Gesamtgrenzwertes (12) zur Beurteilung einer Freigebbarkeit des Messgutes (10), wobei das Bestimmen (105) der Zonen (20) nach dem Bewerten (103) der Gesamtaktivität (11) erfolgt.

4. Verfahren (100) nach einem der vorhergehenden Ansprüche,
**dadurch gekennzeichnet,**
**dass** das Bewerten (107) der Einzelaktivität (21) anhand zumindest eines Zonengrenzwertes (22) zur Beurteilung der Freigebbarkeit des Messgutes (10) erfolgt.

5. Verfahren (100) nach einem der vorhergehenden Ansprüche,
**dadurch gekennzeichnet,**
**dass** das Verfahren (100) folgenden Schritt umfasst:
- Erkennen (104) zumindest eines Aktivitätsbereiches (25) im Messgut (10), wobei der Aktivitätsbereich (25) beim Bestimmen (105) der Zonen (20) berücksichtigt wird, insbesondere sodass eine der Zonen (20) den Aktivitätsbereich (25) einschließt.

6. Verfahren (100) nach einem der vorhergehenden Ansprüche,
**dadurch gekennzeichnet,**
**dass** beim Bewerten (107) der Einzelaktivität (21) für die zumindest eine Zone (20) eine Hintergrundaktivität (24) zumindest einer weiteren Zone (20) berücksichtigt wird, insbesondere wobei ein Wert einer oberen Vertrauensgrenze (21.1) der Einzelaktivität (21) zur Beurteilung der Freigebbarkeit des Messgutes (10) in Abhängigkeit von der Hintergrundaktivität (24) erhöht wird.

7. Verfahren (100) nach einem der vorhergehenden Ansprüche,
**dadurch gekennzeichnet,**
**dass** beim Ermitteln (102, 106) und/oder Bewerten (103, 107) der Einzelaktivität (21) und/oder der Gesamtaktivität (11) Materialparameter (13) des Messgutes (10) berücksichtigt werden, insbesondere wobei die Materialparameter (13) zumindest eine der nachfolgenden Materialeigenschaften umfassen:
- Masse des Messgutes (10),
- Dichte des Messgutes (10),
- Volumen des Messgutes (10),
- Materialtyp des Messgutes (10),
- Geometrie des Messgutes (10).

8. Verfahren (100) nach einem der vorhergehenden Ansprüche,
**dadurch gekennzeichnet,**
**dass** beim Bestimmen (105) der Zonen (20) eine minimale Zonengröße (20.1) berücksichtigt wird, die in Abhängigkeit von den Materialparametern (13) bestimmt wird.

9. Verfahren (100) nach einem der vorhergehenden Ansprüche,
**dadurch gekennzeichnet,**
**dass** zum Ermitteln (102, 106) und/oder Bewerten (103, 107) der Einzelaktivität (21) und/oder der Gesamtaktivität (11) ein flächenbezogener und/oder ein massenbezogener Aktivitätswert in Abhängigkeit von den Materialparametern (13) berechnet wird.

10. Verfahren (100) nach einem der vorhergehenden Ansprüche,
**dadurch gekennzeichnet,**
**dass** eine Freigabe (108) des Messgutes (10) in Abhängigkeit von der Bewertung der Einzelaktivität (21) erfolgt und/oder dass in Abhängigkeit von der Bewertung der Einzelaktivität (21) nach einer Sortierung des Messgutes (10) eine Neubewertung (109) des sortierten Messgutes (10) erfolgt.

11. Computerprogrammprodukt (200), umfassend Befehle (201), die bei einer Ausführung durch eine Steuereinheit (5) die Steuereinheit (5) veranlassen, ein Verfahren (100) nach einem der vorhergehenden Ansprüche auszuführen.

12. Messanlage (1) zur Bewertung eines, insbesondere zumindest teilweise radioaktiven, Messgutes (10) aufweisend
eine Messvorrichtung (3) zur Aufnahme des Messgutes (10) mit mehreren Detektoren (3.1) zum Messen einer Radioaktivität des Messgutes (10),
ein Erfassungsmittel (4) zum Erfassen (101) des Messgutes (10), und
eine Steuereinheit (5) mit einem Unterteilungsmodul (5.1) zum Bestimmen (105) von zumindest zwei Zonen (20) zur berührungslosen Unterteilung des Messgutes (10) in der Messvorrichtung (3) und einem Einzelbewertungsmodul (5.2) zum Ermitteln (106) einer radioaktiven Einzelaktivität (21) für zumindest eine der Zonen (20) und zum Bewerten (107) der Einzelaktivität (21) für die zumindest eine Zone (20) zur Beurteilung einer Freigebbarkeit des Messgutes (10).

13. Messanlage (1) nach Anspruch 12,
**dadurch gekennzeichnet,**
**dass** die Messvorrichtung (3) ein Bewegungsmittel (6) für eine Positionierung des Messgutes (10) relativ zu den Detektoren (3.1) aufweist, wobei die Steuereinheit (5) ein Bereichserkennungsmodul (5.3) zum Erkennen (104) zumindest eines Aktivitätsbereiches (25) im Messgut (10) in Abhängigkeit von zumindest einer Position des Messgutes (10) in der Messvorrichtung (3) umfasst.

14. Messanlage (1) nach einem der Ansprüche 12 oder 13,
**dadurch gekennzeichnet,**
**dass** eine Benutzerschnittstelle (7) zur Eingabe von Materialparametern (13) des Messgutes (10) und/oder zur Ausgabe der Bewertung (107) der Einzelaktivität (21) vorgesehen ist.

15. Messanlage (1) nach einem der vorhergehenden Ansprüche,
**dadurch gekennzeichnet,**
**dass** die Steuereinheit (5) zum Ausführen eines Verfahrens (100) nach einem der vorhergehenden Ansprüche ausgebildet ist.
